Europäisches Patentamt

European Patent Office

Office européen des brevets

(11) Veröffentlichungsnummer: **0 381 827**
**A1**

# (12) EUROPÄISCHE PATENTANMELDUNG

(21) Anmeldenummer: **89121734.1**

(22) Anmeldetag: **24.11.89**

(51) Int. Cl.⁵: **E01C 19/48**

(30) Priorität: **10.02.89 DE 8901493 U**

(43) Veröffentlichungstag der Anmeldung:
**16.08.90 Patentblatt 90/33**

(84) Benannte Vertragsstaaten:
**CH DE ES FR GB IT LI NL SE**

(71) Anmelder: **ABG-WERKE GmbH**
**Kuhbrückenstrasse 18**
**D-3250 Hameln 1(DE)**

(72) Erfinder: **Bächle, Hans-Dieter**
**Heinefeldesweg 9**
**D-3251 Aerzen 1(DE)**

(74) Vertreter: **Sparing - Röhl - Henseler**
**Patentanwälte**
**Rethelstrasse 123 Postfach 14 02 68**
**D-4000 Düsseldorf 1(DE)**

(54) **Strassenfertiger.**

(57) Die Erfindung betrifft einen Straßenfertiger, dessen Fahrzeugrahmen (19) an jeder Seite mit einem Gleiskettenlaufwerk (7) versehen ist, wobei jedes Gleiskettenlaufwerk (7) eine vordere Umlenkrolle (6) für die jeweilige Kette, eine Kettenspanneinrichtung und eine Bremse (16) aufweisen. Damit die Bremsen bis auf den Fall, daß die entsprechende Kette reißt, immer wirksam werden können, und damit zugleich zusätzlicher Ballast im vorderen Bereich durch entsprechende Funktionsteile geschaffen wird, ist vorgesehen, daß die vorderen Umlenkrollen (6) auf einer gemeinsamen Vorderachse (1), die im Fahrzeugrahmen (19) in Fahrtrichtung (21) verstellbar geführt ist, angeordnet sind, wobei die Bremsen in den vorderen Umlenkrollen (6) untergebracht sind und die Kettenspanneinrichtung eine mit der Vorderachse (1) gekoppelte und auf diese einwirkende, einstellbare Spanneinheit (27) ist.

EP 0 381 827 A1

Die Erfindung betrifft einen Straßenfertiger nach dem Oberbegriff des Anspruchs 1.

Bei Straßenfertigern war es bisher üblich, die vorderen Umlenkrollen der Gleiskettenlaufwerke in Gabeln oder Schwingen aufzuhängen, während die Bremsen an den hinteren Umlenkrollen angriffen. Dadurch ist nicht nur ein zusätzlicher Ballast im Vorderteil des Fahrzeugs vorzusehen, sondern es ist hiermit auch der Nachteil verbunden, daß die Bremsen nicht immer wirksam werden können.

Aufgabe der Erfindung ist es, einen Straßenfertiger nach dem Oberbegriff des Anspruchs 1 zu schaffen, bei dem die Bremsen bis auf den Fall, daß die entsprechende Kette reißt, immer wirksam werden können, und bei dem zugleich zusätzlicher Ballast im vorderen Bereich durch entsprechende Funktionsteile geschaffen wird.

Diese Aufgabe wird entsprechend dem kennzeichnenden Teil des Anspruchs 1 gelöst.

Dadurch, daß die vorderen Umlenkrollen auf einer gemeinsamen Vorderachse angeordnet sind, die mit einer einstellbaren Spanneinheit gekoppelt ist, wird ein entsprechender Ballast im vorderen Bereich des Straßenfertigers durch diese Funktionsteile vorgesehen, so daß sich das Anbringen von nutzlosem Ballast im vorderen Fahrzeugbereich im wesentlichen erübrigt. Zum Kettenspannen ist die Vorderachse im Fahrzeugrahmen in Fahrtrichtung oder Längsrichtung des Fahrzeugs verstellbar geführt. Die Bremsen sind in den vorderen Umlenkrollen untergebracht und wirken daher über die Umlenkrollen immer auf die jeweilige Kette ein, wenn sie betätigt werden, es sei denn, daß die Kette reißt.

Weitere Ausgestaltungen der Erfindung sind der nachfolgenden Beschreibung und den Unteransprüchen zu entnehmen.

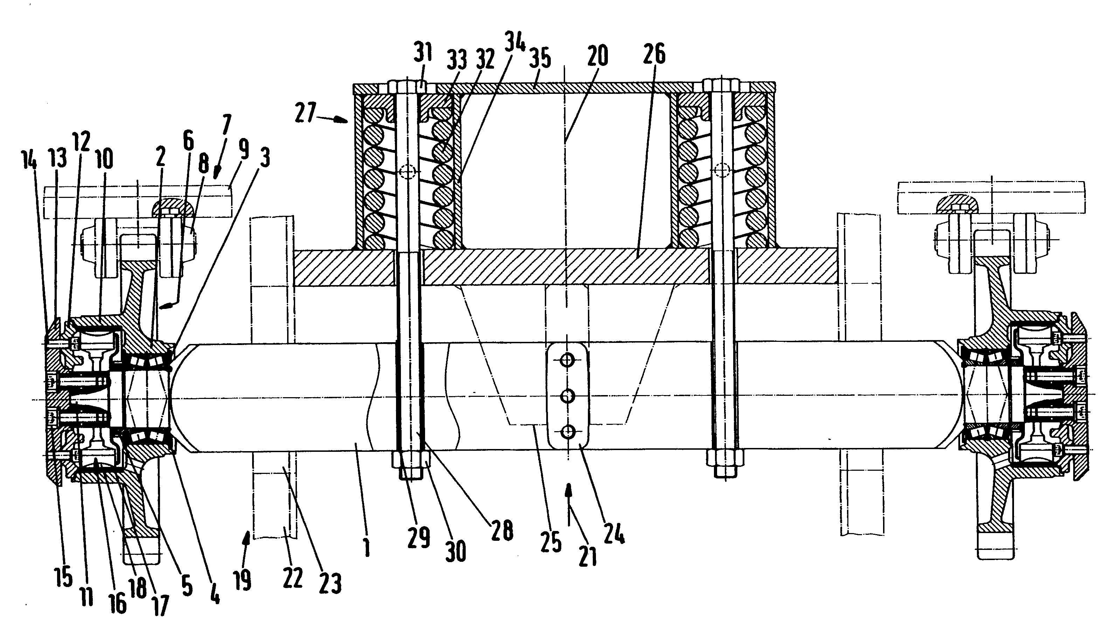

Die Erfindung wird nachstehend anhand eines in der beigefügten Abbildung im wesentlichen im Schnitt dargestellten Ausführungsbeispiels näher erläutert, wobei nur die für die Erfindung wesentlichen Teile im wesentlichen einer Hälfte des Straßenfertigers dargestellt sind.

Der Straßenfertiger besitzt eine durchgehende Vorderachse 1, die auf beiden Seiten jeweils eine Nabe 2 trägt. Die Naben 2 sind über Kegelrollenlager 3, die sich an einer Schulter 4 der Vorderachse 1 in axialer Richtung abstützen und von der Stirnseite der Vorderachse 1 her durch einen auf die Vorderachse 1 geschraubten Sicherungsring 5 gesichert sind, auf der Vorderachse 1 drehbar gelagert.

Die Nabe 2 ist einstückig mit einer vorderen Umlenkrolle 6 eines Kettenlaufwerks 7 ausgebildet, dessen Kettenglieder 8 mit Kettenpolstern 9 versehen sind. Ferner ist ein hohlzylindrischer Bremskranz 10 einstückig mit der Umlenkrolle 6 ausgebildet. Der Bremskranz 10 ist axial nach außen gerichtet und umgibt konzentrisch einen Endabschnitt 11 der Vorderachse 1.

Ein Bremsenträger 12 ist vorgesehen, der auf der Innenseite eines Deckels 13 mittels Schrauben 14 von innen her festgeschraubt ist. Der Deckel 13 seinerseits ist mittels Schrauben 15 mit dem Endabschnitt 11 der Vorderachse 1 verbunden, während eine Bremse 16 innerhalb des von dem Bremskranz 10 umschlossenen Raums und damit in der vorderen Umlenkrolle 6 untergebracht ist. Die Bremse 16 ist insbesondere eine Backenbremse und kann mechanisch und/oder hydraulisch betätigbar sein. Die Bremse 16 umfaßt Bremsbeläge 17, die über Bremsbacken 18 an den Bremskranz 10 andrückbar sind. Zwischen Bremskranz 10 und Bremsenträger 12 befindet sich ein im Schnitt im wesentlichen S-förmiger Spalt, um möglichst Verschmutzungspartikel fernzuhalten.

Die Bremse 16 ist bei dieser Konstruktion für Wartungs- und Instandhaltungsarbeiten leicht von außen zugänglich, ohne daß eine Demontage der Laufwerkskette bzw. der Umlenkrolle 6 notwendig ist.

Der Straßenfertiger umfaßt einen Fahrzeugrahmen 19 mit einer mittleren Längsachse 20, die sich in Fahrtrichtung gemäß dem Pfeil 21 erstreckt. Der Fahrzeugrahmen 19 umfaßt seitliche Wangen 22 mit Durchtrittsöffnungen 23 für die Vorderachse 1. Die Durchtrittsöffnungen 23 sind in Fahrtrichtung 21 langgestreckt ausgebildet, um ein entsprechendes Verstellen der Vorderachse 1 in Fahrtrichtung 21 zum Spannen der Kettenlaufwerke 7 zu ermöglichen. Zu diesem Zweck besitzt die Vorderachse 1 ein Führungsstück 24, das entlang der mittleren Längsachse 20 in Richtung des Pfeils 21 verschiebbar durch eine Führung 25 geführt ist. Die Führung 25 befindet sich an einer die beiden seitlichen Wangen 22 verbindenden frontseitigen Wange 26.

Die Wange 26 trägt eine einstellbare Spanneinheit 27, die symmetrisch zur Achse 20 angeordnet jeweils eine Spannschraube 28 umfaßt, wobei sich die Spannschrauben 28 in Längsrichtung des Straßenfertigers und durch jeweils eine Bohrung 29 der Vorderachse 1 erstrecken und eine Mutter 30 tragen, durch deren Anziehen das Spannen der Ketten erfolgt. Die Spannschrauben 28 stützen sich mit ihrem Kopf 31 über eine Feder 32 unter Zwischenschaltung eines Rings 33 an der Wange 26 ab. Die Schraubenfedern 32 sind in zylindrischen Mänteln 34 aufgenommen, die an der Vorderseite der Wange 26 befestigt sind. Die beiden Mäntel 34 sind vorderseitig durch eine gemeinsame Platte 35 miteinander verbunden und verschlossen, wobei die Platte 35 Öffnungen für die Köpfe 31 der Spannschrauben 28 besitzt.

**Ansprüche**

1. Straßenfertiger, dessen Fahrzeugrahmen (19) an jeder Seite mit einem Gleiskettenlaufwerk (7) versehen ist, wobei jedes Gleiskettenlaufwerk (7) eine vordere Umlenkrolle (6) für die jeweilige Kette, eine Kettenspanneinrichtung und eine Bremse (16) aufweisen, **dadurch gekennzeichnet,** daß die vorderen Umlenkrollen (6) auf einer gemeinsamen Vorderachse (1), die im Fahrzeugrahmen (19) in Fahrtrichtung (21) verstellbar geführt ist, angeordnet sind, wobei die Bremsen in den vorderen Umlenkrollen (6) untergebracht sind und die Kettenspanneinrichtung eine mit der Vorderachse (1) gekoppelte und auf diese einwirkende, einstellbare Spanneinheit (27) ist.

2. Straßenfertiger nach Anspruch 1, dadurch gekennzeichnet, daß die Spanneinheit (27) Spannschrauben (28) umfaßt, die an der Vorderachse (1) angreifen.

3. Straßenfertiger nach Anspruch 2, dadurch gekennzeichnet, daß die Spannschrauben (28) über Kraftspeicher (32) am Fahrzeugrahmen (19) abgestützt sind.

4. Straßenfertiger nach einem der Ansprüche 1 bis 3, dadurch gekennzeichnet, daß die Bremse eine Backenbremse ist.

5. Straßenfertiger nach einem der Ansprüche 1 bis 4, dadurch gekennzeichnet, daß die Umlenkrolle (6) einen hohlzylindrischen, koaxial zur Vorderachse (1) angeordneten Bremskranz (10) aufweist, während die Vorderachse (1) stirnseitig einen abnehmbaren Deckel (13) trägt, der den die Bremse (16) aufnehmenden Raum abschließt.

6. Straßenfertiger nach Anspruch 5, dadurch gekennzeichnet, daß die Bremse (16) einen Bremsenträger (12) umfaßt, der abnehmbar an der Innenseite des Deckels (13) befestigt ist.

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| A | US-A-3 700 288 (DAVIN et al.) * Spalte 2, Zeile 43 - Spalte 3, Zeile 23; Figuren 1-4 * --- | 1 | E 01 C 19/48 |
| A | DE-B-1 213 464 (BARBER-GREENE COMPANY) * Figur 10 * ----- | 1 | |

RECHERCHIERTE SACHGEBIETE (Int. Cl.5)

E 01 C

Der vorliegende Recherchenbericht wurde für alle Patentansprüche erstellt

| Recherchenort | Abschlußdatum der Recherche | Prüfer |
|---|---|---|
| BERLIN | 08-05-1990 | PAETZEL H-J |

EPO FORM 1503 03.82 (P0403)